# EUROPEAN PATENT APPLICATION

(11) **EP 4 725 711 A1**
(43) Date of publication of application: **15.04.2026**
(21) Application number: 25183943.7
(22) Date of filing: 19.06.2025
(51) Int. Cl.: B41J 11/00, B41J 2/32, B41J 15/04, B41J 2/355

(54) **PRINTER, CONCENTRATION SETTING DEVICE, AND CONCENTRATION SETTING METHOD**

(30) Priority: 09.10.2024 JP 2024177292
(71) Applicant: Toshiba TEC Kabushiki Kaisha, Tokyo 141-8562 (JP)
(72) Inventor: KHAING, Min Wai, Tokyo, 141-8562 (JP); CHONG, Jin Zhuo, Tokyo, 141-8562 (JP); OOI, In Seng, Tokyo, 141-8562 (JP); NIHASHI, Kiyotaka, Tokyo, 141-8562 (JP)
(74) Representative: Bandpay & Greuter

(57) **Abstract**

According to one embodiment, a printer includes: a printing unit configured to print on a medium (such as a sheet); an optical sensor configured to receive reflected light from the medium irradiated with a predetermined light before printing; and a concentration setting unit configured to set a print concentration of a group corresponding to a type of the medium on the basis of an output value which is output by the optical sensor receiving the reflected light.

## Description

### FIELD

Embodiments described herein relate generally to a printer, a concentration setting device, and a concentration setting method.

### BACKGROUND

In the related art, if a user adjusts a print concentration which is set in a printer, the user performs the adjustment by using a setting button provided on the printer.

Note that, in a thermal printer, a recording concentration adjustment device is disclosed that records a pattern, in which a recording concentration changes stepwise, on thermal paper when replacing the thermal paper, and determines energy to be applied to a thermal head on the basis of an output signal which is output when a sensor reads the recorded pattern (refer to JPH04-90365A).

However, in the related art, a sheet, of which a concentration is adjusted to an optimal concentration through automatic concentration setting, is a sheet of a predetermined group including sheets with similar color development characteristics on the print surfaces thereof. If a sheet of a different-type group having different color development characteristics on the print surface is used, the concentration adjustment is not optimal. Therefore, when the different-type group is used, a user has to manually adjust the concentration by operating a setting button, which is time-consuming and labor-intensive.

### DISCLOSURE OF THE INVENTION

The problem to be solved by the present invention is to provide a printer, a concentration setting device, and a concentration setting method capable of automatically identifying a set sheet for a group having a concentration setting corresponding to the sheet as defined by the accompanying claims.

In addition to the features set out in the claims, the method may include one or more of the following features:
- the first reflected light has a first wavelength and the second reflected light has a second wavelength, the second wavelength different from the first wavelength;
- steps of receiving reflected light from an unprinted portion of the medium irradiated with the predetermined light before printing, and outputting a first output value;
- steps of receiving reflected light from a printed portion of the medium irradiated with the predetermined light after printing, and outputting a second output value;
- a step of setting a print concentration of the group corresponding to the type of the
- information about groups having the same concentration setting is provided;
- a step of setting a print concentration corresponding to the group from a plurality of the groups in accordance with calculation results calculated from the first output value and the second output value.

### DESCRIPTION OF THE DRAWINGS

FIG. 1 is a perspective view illustrating an example of an exterior of a printer according to an embodiment;
FIG. 2 is a diagram illustrating an example of an internal device configuration of the printer;
FIG. 3 is a diagram illustrating an example of a configuration of control blocks of the printer;
FIG. 4 is a diagram illustrating an example of a data configuration of a print concentration table;
FIG. 5 is a flow chart showing an example of a print concentration setting operation performed by the printer;
FIG. 6 is an explanatory diagram of threshold value determination in ACT3;
FIG. 7 is a diagram illustrating an example of an internal device configuration of a printer according to a modification example of the embodiment;
FIG. 8 is a flow chart showing an example of a print concentration setting operation;
FIGS. 9A and 9B are explanatory diagrams of delta calculation and group identification; and
FIG. 10 is a diagram illustrating an example of a configuration of a concentration setting device according to another embodiment.

### DETAILED DESCRIPTION

Provided are a printer, a concentration setting device, and a concentration setting method capable of automatically identifying a set sheet for a group having a concentration setting corresponding to the sheet.

In general, according to one embodiment, a printer includes: a printing unit configured to print on a medium; an optical sensor configured to receive reflected light from a target location on the medium irradiated with a predetermined light before printing; and a concentration setting unit configured to set a print concentration of a group corresponding to a type of the medium on the basis of an output value which is output by the optical sensor receiving the reflected light.

Hereinafter, embodiments will be described in detail with reference to the drawings. The embodiments will be described later using a thermal printer as an example. Note that, an exemplary embodiment is not limited to the embodiments described later.

Hereinafter, a configuration of a thermal printer used in a POS terminal is shown as an example. Since the thermal printer is used in the POS terminal, the configuration includes other components in addition to the printing unit, the optical sensor used to identify the sheet group, and the concentration setting unit. The example shown below is an example of application to a configuration of a direct thermal recording printer (also referred to as a direct thermal printer) that uses a direct thermal recording method as a printing unit. Although a roll sheet is used as the sheet, the sheet is not limited to the roll sheet. The present disclosure is not limited to sheets, and another medium may be used as long as the medium can be printed.

The printer according to the embodiment may be appropriately applied to other forms as long as the printer includes a printing unit, an optical sensor used to identify a sheet group, and a concentration setting unit.

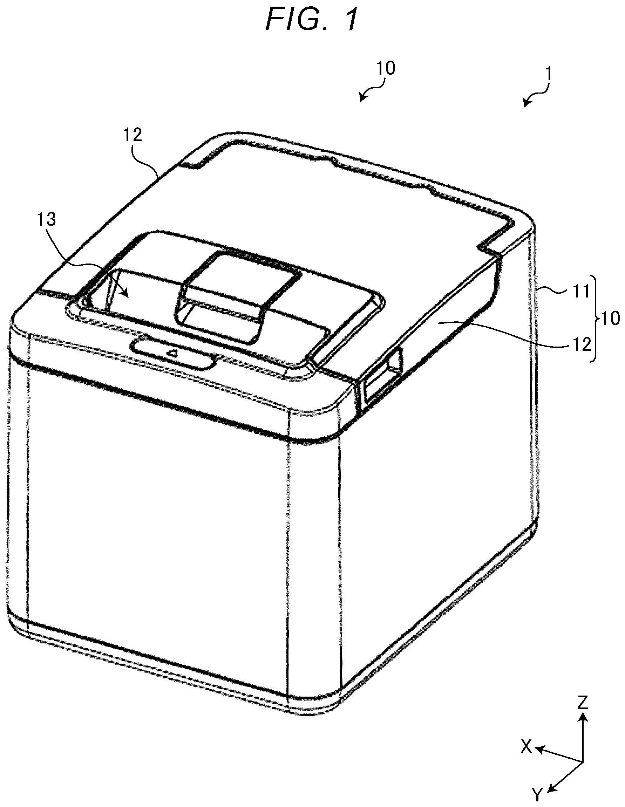

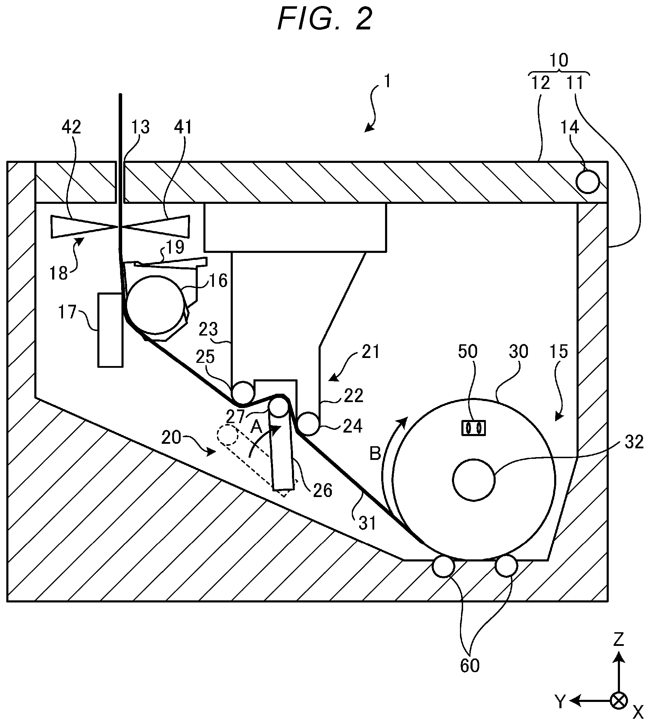

FIG. 1 is a perspective view illustrating an example of an exterior of the printer according to the embodiment. FIG. 2 is a diagram illustrating an example of an internal device configuration of the printer according to the embodiment. Note that, the printer is a thermal printer as an example, and the internal device configuration is schematically shown for ease of understanding.

The X-axis, Y-axis, and Z-axis shown in FIGS. 1 and 2 are coordinate axes. The coordinate axes will be referred to as appropriate when explaining the directions.

First, a housing 10 of a printer 1 shown in FIG. 1 will be described. For example, the housing 10 includes a first housing 11 and a second housing 12. The second housing 12 is supported rotatably relative to the first housing 11 via a shaft 14 (refer to FIG. 2) at one end. A user opens and closes the second housing 12 relative to the first housing 11 by using one end thereof, at which the shaft 14 is positioned, as a fulcrum, thereby replacing a roll sheet 30 (refer to FIG. 2) inside the housing 10. A discharge port 13 on an upper surface of the housing 10 is a discharge port for a sheet 31 (refer to FIG. 2) of the roll sheet 30 (refer to FIG. 2).

Next, the internal device configuration of the printer 1 will be described with reference to FIG. 2. The printer 1 has a containing unit 15, a platen roller 16, a thermal head 17, a cutter mechanism 18, and the like inside the housing 10. The printer 1 pulls out the sheet 31 from the roll sheet 30 contained in the containing unit 15 using the platen roller 16 and the like, prints on the pulled-out sheet 31 using the thermal head 17, and cuts and discharges the sheet 31 using the cutter mechanism 18.

The roll sheet 30 is a sheet in a roll portion in which the long sheet 31 is wound around a roll core 32. Since the printing method uses the thermal head 17, the sheet 31 is a sheet on which texts and pictures are formed through a thermal reaction. One example thereof is a thermal sheet.

The containing unit 15 is a room that contains the roll sheet 30, and is a so-called throw-in type in which the roll core 32 of the roll sheet 30 is not supported on a shaft. For this reason, a lower surface portion that comes into contact with the contained roll sheet 30 has a rotating unit 60 that rotates the roll sheet 30.

The rotating unit 60 is configured with a roller, a belt, or the like. The rotating unit 60 rotates the roll sheet 30 in a B direction of FIG. 2 to feed the sheet 31 in a feed direction to be discharged to the discharge port 13. When the rotating unit 60 rotates the roll sheet 30 in the opposite direction to the B direction, the sheet 31 can be back-fed in a back-feed direction opposite to the feed direction.

In the throw-in method as in this example, the printer 1 may have a member (also referred to as a flapper) for pressing the roll sheet 30, which is contained in the containing unit 15, from above (in a Z direction) against the inner wall of the containing unit 15. For example, the roll sheet 30 is pressed toward the lower surface of the containing unit 15 through a biasing member such as a torsion spring.

Note that, FIG. 2 shows a configuration in which the containing unit 15 has the rotating unit 60 because the roll core 32 of the roll sheet 30 is not supported, but the configuration may not have the rotating unit 60. The configuration may be made such that the roll core 32 of the roll sheet 30 is rotatably supported by providing a bearing or the like in the containing unit 15. The configuration may be made such that the rotating unit 60 is not present.

In the configuration of the printer 1 shown in FIG. 2, the thermal head 17 and the platen roller 16 correspond to the "printing unit (printing component)". The sheet 31 is sent in the feed direction by controlling rotation of the platen roller 16, and the thermal head 17 prints thereon. The platen roller 16 is also able to rotate to return the sheet 31 sent from the printing position in the feed direction to the back-feed direction.

A plurality of heating elements are aligned in the thermal head 17. The thermal head 17 prints on the sheet 31 at the printing position, which is sandwiched between the thermal head 17 and the platen roller 16, due to heat of the heating elements corresponding to the print data.

For example, the thermal head 17 is configured on the first housing 11 side, and the platen roller 16 is configured on the second housing 12 side. In such a case, by closing the second housing 12, as shown in FIG. 2, the platen roller 16 is disposed to come into contact with the thermal head 17. The sheet 31 is sent in the feed direction, passes through the printing position, and is discharged from the discharge port 13.

The cutter mechanism 18 is an example of a cutting unit that cuts the sheet 31. The cutter mechanism 18 has a first blade 41 and a second blade 42. One of the first blade 41 and the second blade 42 is a stationary blade, and the other is a movable blade. The first blade 41 and the second blade 42 are arranged opposite to each other with a conveyance path of the sheet 31 interposed therebetween. The cutter mechanism 18 cuts the sheet 31 between the stationary blade and the movable blade by moving the movable blade toward the stationary blade. Although the configuration provided with the cutter mechanism 18 is shown herein, the cutter mechanism 18 may be detachable.

The optical sensor 50 shown in FIG. 2 is an optical sensor that detects the reflectance of the sheet 31. The optical sensor 50 is configured to receive reflected light from a target location on the medium irradiated with a predetermined light before printing. The optical sensor 50 irradiates the side wall of the roll sheet 30 with light emitted from a light emitting unit and receives the reflected light from the roll sheet 30 through a light receiving unit. The side wall of the roll sheet 30 refers to a part of the roll sheet 30 that has a plurality of layers of a sheet in a thickness direction in a state where the sheet is wound in the radial direction. In the present embodiment, a region or a range irradiated with light is not particularly limited as long as the region or the range is on the side wall of the roll sheet 30.

The optical sensor 50 in an example of the present embodiment uses a reflective photosensor. The optical sensor 50 of the example has both the light emitting unit and the light receiving unit. However, the light emitting unit and the light receiving unit may be provided separately.

A sensor, which detects a diameter or a remaining amount of the roll sheet 30 in a configuration according to the related art, may be used as the optical sensor 50.

The printer 1 having such a configuration sends the sheet 31 in the feed direction, prints the sheet 31 through the thermal head 17, discharges the sheet 31 from a leading-edge portion thereof, and cuts the sheet 31 through the cutter mechanism 18. Then, the printer 1 performs switching to the back-feed direction, and returns the leading-edge portion of the sheet 31 to the printing position of the thermal head 17. When receiving the next print data, the printer 1 sends the sheet 31 in the feed direction, and performs the same operation.

The damper unit 20 shown in FIG. 2 is provided between the containing unit 15 for the roll sheet 30 and the platen roller 16. The damper unit 20 abuts against one side of the sheet 31 to apply an elastic force to the sheet 31, maintaining the tension of the sheet 31.

The damper unit 20 shown as an example has a frame unit 26 and a rotating roller 27. The frame unit 26 is, for example, a plate-shaped member in a width direction (X direction) of the printer 1. One end of the frame unit 26 is fixed with respect to a rotating shaft that rotates the frame unit 26. The frame unit 26 is also biased in the clockwise direction indicated by an arrow A in FIG. 2 by a biasing member such as a torsion spring. The frame unit 26 is configured to be rotatable around the rotating shaft. The rotating roller 27 is provided on the other end side of the frame unit 26. The rotating roller 27 is able to rotate in a conveyance direction of the sheet 31 in contact with the sheet 31.

The first guide unit 19 is a guide member for smoothly moving the sheet 31 conveyed between the platen roller 16 and the cutter mechanism 18. The second guide unit 21 is a guide member for reducing curls that occur in the sheet 31. The second guide unit 21 is positioned to face the damper unit 20.

For example, the second guide unit 21 has a first member 22 and a second member 23. The first member 22 and the second member 23 are plate members or the like. A first contact unit 24 and a second contact unit 25 are respectively provided at one end of the first member 22 and one end of the second member 23. With such a configuration, the sheet 31 is folded back by the rotating roller 27, the first contact unit 24, and the second contact unit 25. As a result, curls can be reduced.

In the printer 1, the control blocks operate by receiving power from an external power source or a built-in battery. The printer 1 may be provided with a power terminal and a connection terminal used for connecting to an external device such as a host device.

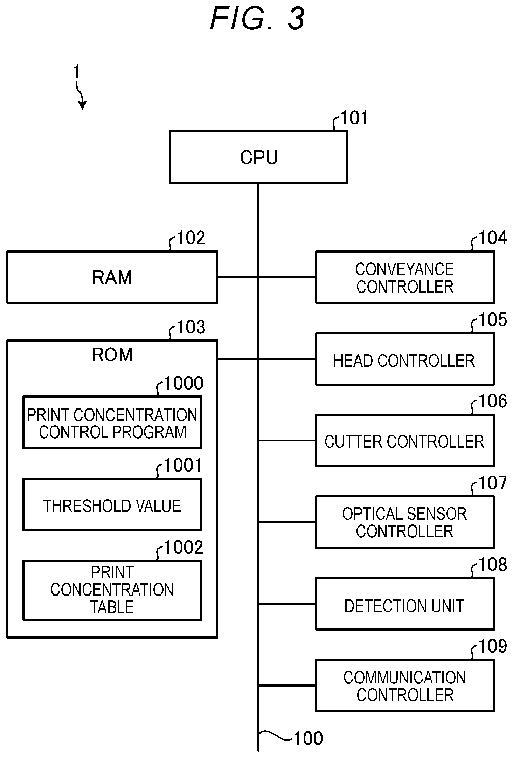

FIG. 3 is a diagram illustrating an example of a configuration of control blocks of the printer 1. As shown in FIG. 3, the printer 1 has a computer such as a central processing unit (CPU) 101, a random-access memory (RAM) 102, and a read only memory (ROM) 103. The CPU 101, the RAM 102, and the ROM 103 are connected via a bus 100 so as to be able to communicate with one another.

The CPU 101 executes a predetermined program stored in the ROM 103 and controls the entire printer 1. The CPU 101 uses the RAM 102 as a workspace.

The ROM 103 stores the control program executed by the CPU 101 and various data. The ROM 103 is, for example, a flash memory. The control program stored in the ROM 103 includes a print concentration control program 1000 that performs logic setting to be described later, data about a threshold value 1001, and data about a print concentration table 1002.

In addition, in the printer 1, a conveyance controller 104, a head controller 105, a cutter controller 106, an optical sensor controller 107, a detection unit 108, a communication controller 109, and the like are connected to the bus 100.

The conveyance controller 104 is a controller that controls rotation of the rotating unit 60 and the platen roller 16 through a motor or the like. For example, the motor may be a stepping motor. The CPU 101 controls the rotation of the rotating unit 60 and the platen roller 16 through the conveyance controller 104, thereby sending the sheet 31 in the feed direction or the back-feed direction.

The head controller 105 is a controller for the thermal head 17. For example, the head controller 105 generates a strobe signal for heating the corresponding heating element of the thermal head 17 on the basis of the print data sent from the CPU 101, and causes the corresponding heating element of the thermal head 17 to generate heat by using the strobe signal.

The cutter controller 106 is a controller for the cutter mechanism 18. When receiving an instruction from the CPU 101, the cutter controller 106 cuts the sheet 31 by driving the cutter mechanism 18.

The optical sensor controller 107 is a controller for the optical sensor 50. When receiving an instruction from the CPU 101, the optical sensor controller 107 causes the light emitting unit of the optical sensor 50 to emit light with a predetermined driving current value. Then, the optical sensor controller 107 outputs an output value to the CPU 101 that corresponds to the driving current value for causing the light emitting unit to emit light and an amount of light received by the light receiving portion. The output value may appropriately use any other information, as long as the output value is information based on the reflectance of the sheet 31. For example, the information may be information indicating a ratio of the amount of light emitted by the light emitting unit to the amount of light received by the light receiving unit.

The detection unit 108 outputs detection signals from other sensors of the printer 1 to the CPU 101. Examples of the other sensors may include an opening-and-closing sensor that detects whether the second housing 12 is opened or closed, a detection sensor that detects that the roll sheet 30 is contained, and a position sensor that detects the sheet conveyance position. In addition, a temperature sensor that measures the temperature of the thermal head 17 may be provided.

The communication controller 109 is a controller that causes the CPU 101 to communicate with a host device such as a POS terminal. The communication controller 109 performs communication using infrared communication such as IrDA, universal serial bus (USB), local area network (LAN), RS-232C, Bluetooth (registered trademark), and the like.

In the printer 1 having the above-mentioned configuration, for example, the CPU 101 receives print data transmitted from the host device via the communication controller 109. The RAM 102 temporarily stores the received print data. The CPU 101 controls and drives each unit of the printer 1 to print texts, pictures, and the like corresponding to the print data on the sheet 31.

More specifically, the CPU 101 controls the conveyance controller 104, thereby conveying the sheet 31 in the feed direction. The CPU 101 controls the head controller 105 on the basis of the print data, thereby printing texts, pictures, and the like corresponding to the print data on the sheet 31 at the position of the thermal head 17. Subsequently, when the sheet 31 completely printed is discharged from the discharge port 13, the CPU 101 stops the conveyance in the feed direction and controls the cutter controller 106 such that the cutter controller 106 cuts a part of the printed sheet 31. Then, the CPU 101 controls the conveyance controller 104 such that the conveyance controller 104 conveys the leading-edge portion of the sheet 31 in the back-feed direction to the printing position of the thermal head 17, and waits until the next print data is received.

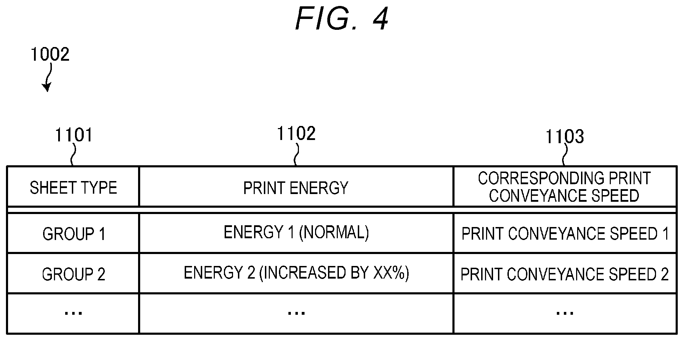

FIG. 4 is a diagram illustrating an example of a data configuration of the print concentration table 1002. The print concentration table 1002 shown in FIG. 4 has a data configuration showing correspondence among sheet type 1101, print energy 1102, and corresponding print conveyance speed 1103.

In the sheet type 1101, group number information, in which a group is made for each of a plurality of the same types, is set. For example, sheets are classified into groups 1, 2, ... in accordance with the groups that have similar color development characteristics on the print surface of the sheet. The group 1 is a sheet that is generally used in Japan. The group 2 is a different-type group that is not used in Japan and has color development characteristics different from the group 1.

For example, the group 2 may be a sheet in which a black layer is superimposed on a white base sheet, and a surface layer containing air bubbles is provided on the black layer. Examples of the group 2 may include a sheet referred to as Blue4est (registered trademark). The sheet having such a structure is grayish due to light incident on the surface layer. The black layer is exposed by evaporating the surface layer through high heat generated from the heating elements, and thereby black texts and pictures are formed on the sheet. In such a type of sheet, the texts and pictures printed on the print surface have developed colors which are worse than the normal sheet. In addition, if printing is performed with the print concentration setting of the group 1, the concentration is not optimally adjusted.

To achieve the optimal concentration, the group 2 requires more energy 2 than energy 1 for the normal sheet. Here, the energy refers to energy applied to the sheet by the heating elements, and it is necessary to increase the energy by several percent for the sheet of the group 2. If the amount of heat generated by the heating element is constant, the energy applied to the sheet is increased by slowing down the print conveyance speed. For example, the rotation of the platen roller 16 may be slowed down by switching the print conveyance speed from the normal print conveyance speed 1 to print conveyance speed 2 which is slower than the print conveyance speed 1.

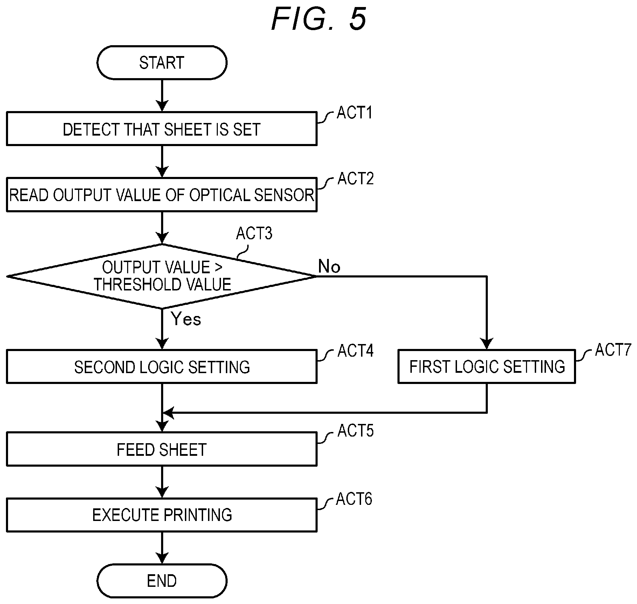

Next, referring to FIG. 5, an example of the print concentration setting operation performed by the printer 1 will be described. In the printer 1, the CPU 101 executes the print concentration control program 1000 (refer to FIG. 3) stored in the ROM 103 (refer to FIG. 3). Therefore, the CPU 101 functions as a control unit that controls the print concentration, and integrally controls the entire printer, thereby performing the print concentration setting operation.

When the roll sheet 30 is first installed or replaced, the printer 1 performs the print concentration setting operation by using the above-mentioned function. For example, the print concentration setting operation is performed at the timing of an operation check that is performed after the roll sheet 30 is inserted in the printer 1.

FIG. 5 is a flow chart showing an example of the print concentration setting operation performed by the printer 1. First, the printer 1 (control unit) detects that the sheet is set (ACT1). This act is to detect that the roll sheet 30 is inserted from the containing unit 15 which is empty. If the roll sheet 30 remains contained and is not removed, the print concentration setting remains unchanged. In other words, if the roll sheet 30 remains contained and is not removed, the previous concentration setting remains unchanged and the print concentration setting operation is not newly performed.

If the printer 1 (control unit) detects that the sheet is set, the printer 1 drives the optical sensor 50 under the control of the optical sensor controller 107 and reads the output value of the optical sensor 50 from the optical sensor controller 107 (ACT2).

The printer 1 (control unit) compares the output value which is read in ACT2 with the threshold value 1001 stored in the ROM 103 (ACT3).

If the output value is greater than the threshold value 1001, the printer 1 (control unit) sets a second logic (ACT4). The second logic is a print conveyance control logic corresponding to the print conveyance speed 2.

The printer 1 (control unit) then feeds the sheet under the control of the conveyance controller 104 (ACT5), and further controls the head controller 105, thereby executing printing (ACT6).

If the output value is equal to or less than the threshold value 1001, the printer 1 (control unit) sets the first logic (ACT7) and executes Acts 5 and 6. The first logic is a print conveyance control logic corresponding to the print conveyance speed 1.

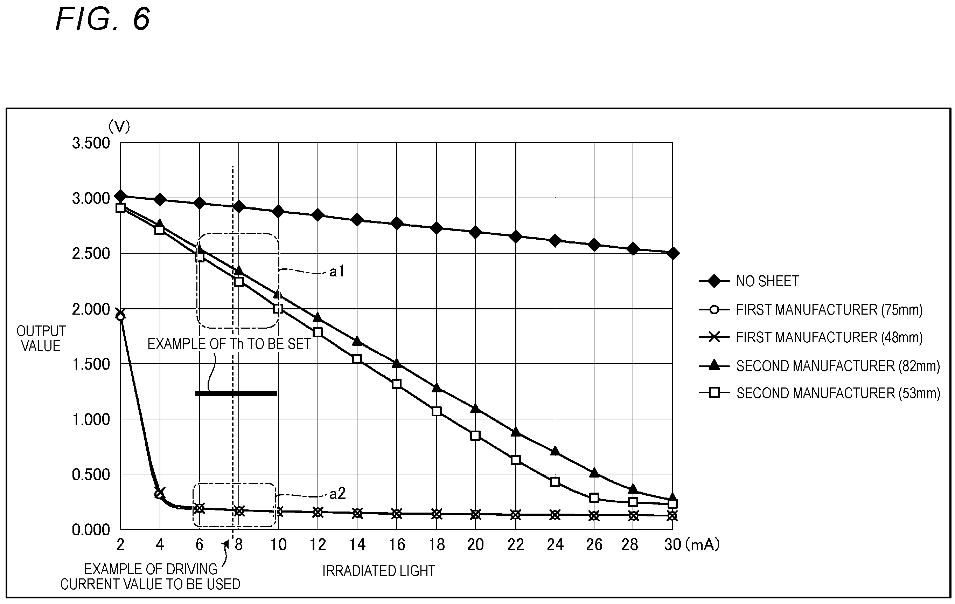

FIG. 6 is an explanatory diagram of the threshold value determination in ACT3. FIG. 6 shows a graph illustrating a relationship between the driving current value (set value) of the irradiated light emitted from the optical sensor 50 and the output value corresponding to the amount of reflected light received by the optical sensor 50 from the side wall of the roll sheet 30. For example, a sheet of a first manufacturer (a thickness of 75 mm), a sheet of the first manufacturer (a thickness of 48 mm), a sheet of a second manufacturer (a thickness of 82 mm), and a sheet of the second manufacturer (a thickness of 53 mm) are shown for comparison. Note that, the term "no sheet" refers to a case where roll sheet 30 is not contained. Although the detection unit 108 is able to detect the state of "no sheet" in advance, the value in the case of "no sheet" is also shown for comparison.

As shown in FIG. 6, if the driving current value of the irradiated light is increased, the output value (converted into voltage) decreases in accordance with the amount of reflected light received from the side wall of the roll sheet 30. In the example shown in FIG. 6, the output value is maximum when there is no reflection. The output values of the second manufacturer in the group 2 and the first manufacturer in the group 1 are largely separated into an upper distribution a1 and a lower distribution a2 of a threshold value Th between 1.0V and 1.5V in a range of 6 mA to 10 mA as shown in FIG. 6. Therefore, the light emitting unit of the optical sensor 50 is set to emit light within the range of 6 mA to 10 mA, and the threshold value Th shown in FIG. 6 is stored in the threshold value 1001. Then, during the print concentration setting operation, the optical sensor 50 receives the reflected light from the irradiated light of the setting and compares the output value with the threshold value Th. If the output value is greater than the threshold value Th, the sheet is identified as belonging to the group 2, and the energy applied to the sheet is increased more than the energy of the normal sheet (group 1). Preferably, the irradiated light is set to 7 mA, and the threshold value 1001 is stored as the threshold value Th (= 1.1V). Since there is a difference between the output value of the no-sheet state and the output value of the second manufacturer, it is also possible to determine the no-sheet state from the output value. Without detecting the no-sheet state through the detection unit 108, a second threshold value may be set between the value of the curve corresponding to the no-sheet state and the distribution a1, and the no-sheet state may be determined on the basis of only the output value. If the no-sheet state is detected in such a manner, the print concentration setting operation may be omitted.

In such a manner, in the present embodiment, the group corresponding to the sheet type is identified on the basis of the reflectance of the sheet, and the print concentration setting corresponding to the identified group is performed.

In the present embodiment, the optical sensor used to determine the sheet group is the optical sensor 50 that receives the reflected light from the side wall of the roll sheet 30 irradiated with the irradiated light (predetermined light), but a different optical sensor may be used as appropriate. One example of the different optical sensor is an optical sensor that receives the reflected light from the print surface irradiated with the irradiated light. The irradiated light may be changed to light of a wavelength range different from the irradiated light with which the side wall of the roll sheet 30 is irradiated.

The optical sensor corresponding to the above-mentioned print surface is positioned to face the print surface of the sheet 31. For example, the optical sensor corresponding to the above-mentioned print surface may be positioned to face the roll sheet 30 on the lower surface of the containing unit 15 with which the contained roll sheet 30 comes into contact. The optical sensor disposed to correspond to the print surface irradiates the print surface of the sheet 31 before the sheet 31 is pulled out of the roll sheet 30 and receives the reflected light.

The optical sensor corresponding to the above-mentioned print surface may also be disposed along the conveyance direction of the sheet 31 pulled out of the roll sheet 30. The optical sensor may be appropriately disposed at any position as long as the position is on the conveyance path to the discharge port 13. Examples of the position include a position of the sheet 31 immediately after the sheet 31 is pulled out of the roll sheet 30 and the like.

The optical sensor corresponding to the above-mentioned print surface may be newly provided. The optical sensor may be configured for a different purpose in a device of the related art. Therefore, if the optical sensor is configured in the device, the optical sensor used in the related art may be used instead.

The above-mentioned configuration may include at least the optical sensor 50 (first optical sensor) that receives the reflected light from the side wall of the roll sheet 30 irradiated with the irradiated light and the optical sensor (second optical sensor) that receives the reflected light from the print surface irradiated with the irradiated light. In such a case, the sheet group can be identified using the output value of the first optical sensor and the output value of the second optical sensor. For example, the second logic may be set if either the output value of the first optical sensor or the output value of the second optical sensor is greater than a threshold value. **In** addition, for example, the second logic may be set if both the output value of the first optical sensor and the output value of the second optical sensor are greater than a threshold value. The two identification methods may be set appropriately in accordance with the printer.

Another example of the optical sensor is an optical sensor that receives reflected light from a non-print surface which is a back side of the print surface irradiated with the irradiated light. The irradiated light may be appropriately changed to light in a wavelength range different from the irradiated light with which the side wall of the roll sheet 30 is irradiated.

The optical sensor corresponding to the above-mentioned non-print surface is positioned to face the non-print surface of the sheet 31. The optical sensor corresponding to the above-mentioned non-print surface is disposed along the conveyance direction of the sheet 31 pulled out of the roll sheet 30. The optical sensor irradiates the non-print surface of the sheet 31 and receives the reflected light. The optical sensor may be appropriately disposed at any position as long as the position is on the conveyance path to the discharge port 13. Examples of the position include a position of the sheet 31 immediately after the sheet 31 is pulled out of the roll sheet 30 and the like.

The optical sensor corresponding to the above-mentioned non-print surface may be newly provided. The optical sensor may be configured for a different purpose in a device of the related art. Therefore, if the optical sensor is configured in the device, the optical sensor used in the related art may be used instead. For example, if the device of the related art has a sensor for detecting black marks, the sensor may be appropriately used instead.

The above-mentioned configuration may include at least the optical sensor 50 (first optical sensor) that receives the reflected light from the side wall of the roll sheet 30 irradiated with the irradiated light and an optical sensor (third optical sensor) that receives the reflected light from the non-print surface irradiated with the irradiated light. **In** such a case, the sheet group can be identified using the output value of the first optical sensor and the output value of the third optical sensor. For example, the second logic may be set if either the output value of the first optical sensor or the output value of the third optical sensor is greater than a threshold value. **In** addition, for example, the second logic may be set if both the output value of the first optical sensor and the output value of the third optical sensor are greater than a threshold value. The two identification methods may be set appropriately in accordance with the printer.

The printer may be configured to include the first optical sensor, the second optical sensor, and the third optical sensor. **In** such a configuration, the sheet group can be identified using the output value of the first optical sensor, the output value of the second optical sensor, and the output value of the third optical sensor. For example, the second logic may be set if one or more output values of the first optical sensor, the second optical sensor, and the third optical sensor are greater than the threshold value. In addition, for example, the second logic may be set if the output values of the first optical sensor, the second optical sensor, and the third optical sensor all are greater than the threshold value. The two identification methods may be set appropriately in accordance with the printer. Each irradiated light may be changed appropriately to light having a different wavelength range.

In the present embodiment, the above-mentioned configuration makes it possible to automatically adjust to the optimal concentration setting even when using different-type groups of sheets having different color development characteristics on the print surface.

### (Modification of Embodiment)

The embodiment shows a method in which the optical sensor 50 irradiates the side wall of the roll sheet 30 with light from the light emitting unit and receives the reflected light from the roll sheet 30 to identify the group of the sheet 31 from the reflectance of the sheet 31. Hereinafter, a modification example is shown in which the group of the sheet 31 is identified by detecting reflectances of a printed portion and a blank portion of the sheet 31.

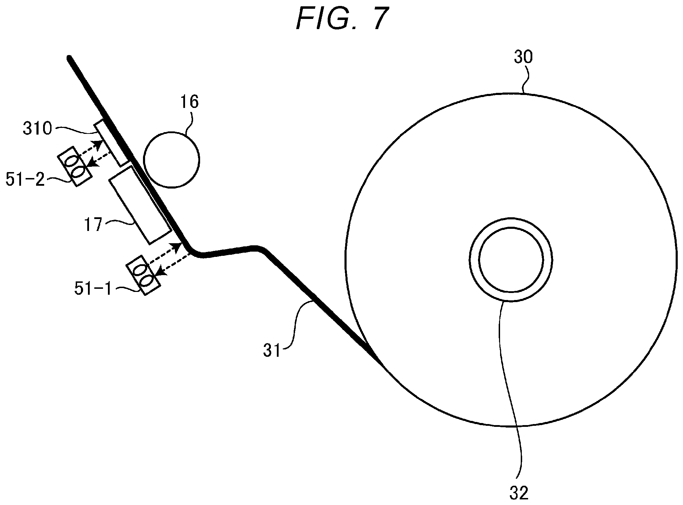

FIG. 7 is a diagram illustrating an example of an internal device configuration of a printer 1 according to the modification example. In FIG. 7, main parts relating to the optical sensor 50 are extracted from FIG. 2 and shown in order to show a modification example of the optical sensor 50 shown in FIG. 2. In FIG. 7, the parts corresponding to the configuration shown in FIG. 2 are represented by the same numerals. In FIG. 7, other configurations are not shown, but may be appropriately included in a configuration of the modification example.

As shown in FIG. 7, the printer according to the modification example has a first optical sensor 51-1 and a second optical sensor 51-2 as optical sensors that identify the group of the sheet 31.

The first optical sensor 51-1 and the second optical sensor 51-2 each irradiate with light a region of the print surface of the sheet 31 where the thermal head 17 performs printing.

The first optical sensor 51-1 irradiates with light an unprinted portion (also referred to as a blank portion) of the print surface, and receives the reflected light from the blank portion.

The second optical sensor 51-2 irradiates with light a region (referred to as the printed portion) 310 of the print surface where the thermal head 17 performs printing, and receives the reflected light from the printed portion 310.

Whether the portion is blank or printed may be determined from the output result by receiving (green, red, blue, and infrared) light for each wavelength range of the light in the optical sensor.

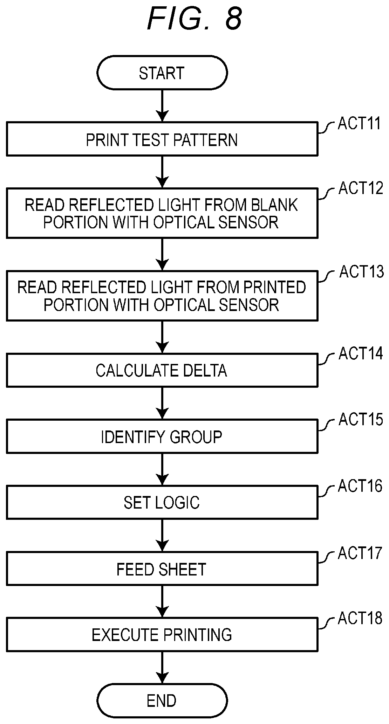

FIG. 8 is a flow chart showing an example of a print concentration setting operation performed by the printer according to the modification example. Note that, processing that should not be clarified in FIG. 8 is appropriately omitted.

First, the printer (control unit) according to the modification example feeds a sheet under the control of the conveyance controller 104 at the timing of an operation check performed after the roll sheet 30 is inserted, and controls the head controller 105, thereby printing a test pattern (ACT11).

Next, the printer (control unit) according to the modification example irradiates with light the blank portion using the first optical sensor 51-1 under the control of the optical sensor controller 107. Then, the printer reads a first output value (output value corresponding to the reflectance of the blank portion) which is an output value of the first optical sensor 51-1 corresponding to the reflected light from the blank portion (ACT12).

The printer (control unit) according to the modification example irradiates with light the printed portion 310 using the second optical sensor 51-2 under the control of the optical sensor controller 107. Then, the printer reads a second output value (output value corresponding to the reflectance of the printed portion 310) which is an output value of the second optical sensor 51-2 corresponding to the reflected light from the printed portion 310 (ACT13).

Note that, Acts 12 and 13 may be performed simultaneously, or may be performed in reverse order.

The printer (control unit) according to the modification example then calculates a delta (ACT14). The calculation of the delta is a calculation of a difference between the first output value which is read in ACT12 and the second output value which is read in ACT13.

Then, the printer (control unit) according to the modification example identifies the group on the basis of the result of the calculation of the delta (ACT15). The printer (control unit) according to the modification example identifies the group of the sheet by comparing the result of the calculation of the delta with the threshold value 1001 for group identification stored in the ROM 103.

Subsequently, the printer (control unit) according to the modification example sets logic corresponding to the identified group (ACT16). The logic is a print conveyance control logic.

Then, when receiving print data from the POS device, the printer (control unit) according to the modification example further feeds the sheet under the control of the conveyance controller 104 (ACT17), and controls the head controller 105, thereby executing printing (ACT18).

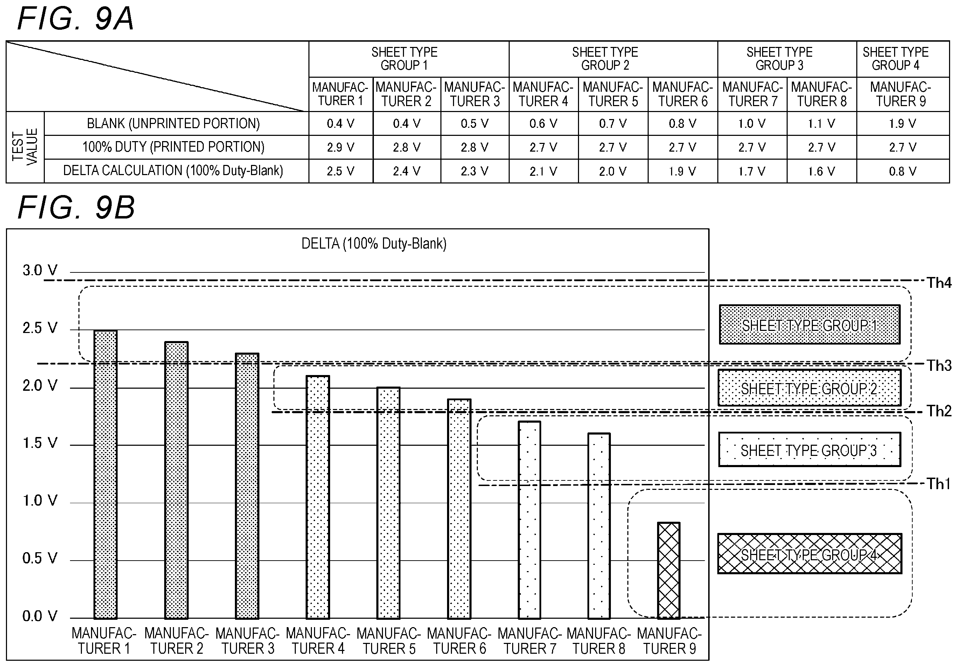

FIGS. 9A and 9B are explanatory diagrams of delta calculation and group identification. FIG. 9A is an explanatory diagram of delta calculation. FIG. 9A is a table in which sheets are classified into a plurality of groups having the same types.

For example, the sheets may be classified into four groups: sheet type group 1, sheet type group 2, sheet type group 3, and sheet type group 4. One example of the method of group classification is to classify the sheets into groups having similar color development characteristics of the print surface of the sheet. In this example, the sheet type group 1, the sheet type group 2, and the sheet type group 3 are sheets prescribed by manufacturers in Japan. The sheet type group 4 is a different-type group which is not used in Japan.

For example, the sheet type group 4 is a sheet in which a black layer is superimposed on a white base sheet, and a surface layer containing air bubbles is provided on the black layer. The sheet type group 1, the sheet type group 2, and the sheet type group 3 are normal sheets.

In the table shown in FIG. 9A, for example, in the sheet type group 1, the sheets of manufacturer 1, manufacturer 2, and manufacturer 3 are associated as the same type of sheet. Thus, the respective corresponding positions are filled with the respective read values (output values V corresponding to the reflectances of the sheet) of the first optical sensor 51-1 and the second optical sensor 51-2 when the sheets of manufacturer 1, manufacturer 2, and manufacturer 3 are tested.

For example, the "blank (unprinted portion)" in the table contains the read values (output values V corresponding to the reflectances of the blank portion) of the first optical sensor 51-1. The "100% duty (printed portion)" in the table contains the read values (output values V corresponding to the reflectances of the printed portion 310) of the second optical sensor 51-2. Note that, the "100% duty (printed portion)" refers to the printed portion 310 when printed in 100% solid color.

In the "delta calculation", values are obtained by subtracting values (output values V corresponding to the reflectances of the blank portion) of the "blank (unprinted portion)" from values (output values V corresponding to the reflectances of the printed portion 310) of the "100% duty (printed portion)". The "delta calculation" in the table is filled with values (ΔV) after each delta calculation.

Sheets of manufacturers having similar values are pre-grouped as the same type of sheet on the basis of the values (ΔV) with which the "delta calculation" in the table is filled.

FIG. 9B is an explanatory diagram of group identification. In FIG. 9B, a bar graph shows the values (ΔV) after delta calculation in the table of FIG. 9A. As shown in FIG. 9B, the groups can be distinguished from one another through grouping.

In the example shown in FIG. 9B, the sheet type group 4, which is a different-type group from the others, has a large difference in value. Therefore, the sheet type group 4 can be distinguished from the other groups by setting a threshold value Th1.

Since the delta calculation is performed, the sheet type group 1, the sheet type group 2, and the sheet type group 3 can be distinguished by setting the threshold values Th2, Th3, and Th4, respectively, as in the example shown in FIG. 9B.

For example, when the delta calculation result in the range of sheet type group 2 is obtained by ACT14 of the print concentration setting operation shown in FIG. 8, a value between the threshold values Th2 and Th3 is obtained. Therefore, the group is identified as the sheet type group 2 from the delta calculation result by comparing the threshold values Th2 and Th3.

In the above-mentioned modification example, the first optical sensor 51-1 for detecting the reflectance of the blank portion and the second optical sensor 51-2 for detecting the reflectance of the printed portion 310 are provided. However, by providing only one optical sensor and conveying the sheet, the reflectance of the blank portion and the reflectance of the printed portion 310 may be detected before and after the sheet is conveyed. In such a case, only the first optical sensor 51-1 or only the second optical sensor 51-2 may be used. When only the second optical sensor 51-2 is used, the reflectance of the printed portion 310 is detected by back-feeding or the like of the sheet after printing.

In such a manner, in the configuration of the modification example, it is possible to detect the reflectance of the printed portion and the blank portion of the sheet 31. Further, since the delta calculation is performed from the respective detection results, it is possible to distinguish groups which it is not easy to distinguish by the side walls of the roll sheet alone. As a result, even groups of the same type can be further divided into sub-groups and each sub-group can be set to an optimal concentration setting.

### (Other Embodiments)

In the above-mentioned embodiments and modifications, the concentration setting method executable by the printer may be provided in the form of a concentration setting device incorporated into the printer, or may be provided as a concentration setting device separate from the printer.

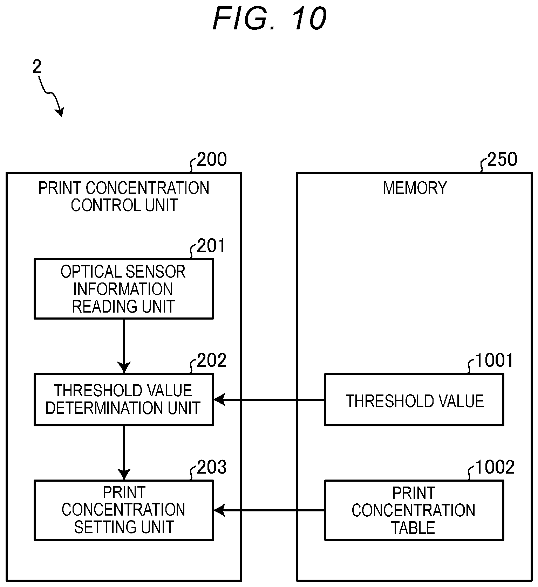

FIG. 10 is a diagram illustrating an example of a configuration of a concentration setting device according to another embodiment. A concentration setting device 2 shown as an example in FIG. 10 has a print concentration control unit 200 and a memory 250.

The print concentration control unit 200 has an optical sensor information reading unit 201, a threshold value determination unit 202, and a print concentration setting unit 203. The memory 250 stores the threshold value 1001 and the print concentration table 1002. The memory 250 may be a volatile memory, a non-volatile memory, or a storage.

The optical sensor information reading unit 201 emits light from a specific optical sensor provided in the printer and reads an output value which is output from the optical sensor.

The threshold value determination unit 202 compares the output value, which is read by the optical sensor information reading unit 201, with the threshold value 1001 stored in the memory 250.

The print concentration setting unit 203 sets the corresponding logic of the print concentration table 1002 stored in the memory 250 for the printer, on the basis of the comparison result obtained by the threshold value determination unit 202.

By adopting the configuration of the concentration setting device 2 in such a manner, the function of the existing printer having the optical sensor 50 can be improved by applying the concentration setting device 2.

In the above-mentioned example, the optical sensor detects the reflectance of the sheet. However, the existing printer may be provided with the optical sensor that detects the output of transmitted light of the irradiated light on the sheet, or may be limited to the arrangement of the optical sensor that detects the output of transmitted light of the irradiated light on the sheet. In such a case, the transmittance of the sheet may be detected by the optical sensor as an alternative to reflected light, and the above-mentioned concentration setting method may be modified so as to be applicable.

The programs executed by the printer 1 according to the embodiment and the modification example are provided by being recorded in a computer-readable recording medium such as a CD-ROM, a flexible disk (FD), a CD-R, or a digital versatile disk (DVD) in an installable or executable format.

The programs executed by the printer 1 according to the embodiment and the modification example may be provided by being contained on a computer connected to a network such as the Internet and downloaded via the network. The programs executed by the printer 1 according to the embodiment and the modification example may be provided or distributed via a network such as the Internet.

The programs executed by the printer 1 according to the embodiment and the modification example may be provided by being pre-installed in the ROM or the like.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims and their equivalents are intended to cover such forms or modifications as would fall within the scope of the disclosure.

## Claims

1. A printer, comprising:
a printing component configured to print on a medium;
an optical sensor (50) configured to receive reflected light from the medium irradiated with a predetermined light before printing; and
a concentration setting component configured to set a print concentration of a group corresponding to a type of the medium on a basis of an output value which is output by the optical sensor receiving the reflected light.

2. The printer according to claim 1, wherein a location irradiated with the predetermined light is on a side wall of the medium having a roll shape.

3. The printer according to claim 2, further comprising:
a plurality of the optical sensors,
wherein the plurality of optical sensors include at least a first optical sensor configured to receive a first reflected light, which is reflected light from the side wall irradiated with the predetermined light, and a second optical sensor configured to receive a second reflected light, which is reflected light from a print surface of the medium irradiated with the predetermined light.

4. The printer according to claim 3, wherein the first reflected light has a first wavelength and the second reflected light has a second wavelength, the second wavelength different from the first wavelength.

5. The printer according to any one of claims 2 to 4, further comprising:
a plurality of the optical sensors,
wherein the plurality of optical sensors include at least a first optical sensor configured to receive a first reflected light, which is reflected light from the side wall irradiated with the predetermined light, and a second optical sensor configured to receive a second reflected light, which is reflected light from a back side of a print surface of the medium irradiated with the predetermined light.

6. The printer according to claim 5, wherein the first reflected light has a first wavelength and the second reflected light has a second wavelength, the second wavelength different from the first wavelength.

7. The printer according to any one of claims 1 to 6,
wherein the optical sensor receives reflected light from an unprinted portion of the medium irradiated with the predetermined light before printing, and outputs a first output value, and the optical sensor receives reflected light from a printed portion of the medium irradiated with the predetermined light after printing, and outputs a second output value, and
wherein the concentration setting component sets a print concentration of the group corresponding to the type of the medium on a basis of the first output value and the second output value.

8. The printer according to claim 7,
wherein information about groups having the same concentration setting is provided, and
wherein the concentration setting component sets a print concentration corresponding to the group from a plurality of the groups in accordance with calculation results calculated from the first output value and the second output value.

9. The printer according to any one of claims 1 to 8,
wherein the optical sensor is further configured to detect a diameter or a remaining amount of the medium, the medium comprising a roll sheet.

10. The printer according to any one of claims 1 to 9,
wherein the printing component comprises a thermal print head.

11. A concentration setting device for a printer including a printing component configured to print on a medium and an optical sensor configured to receive reflected light from a target location on the medium irradiated with a predetermined light, the concentration setting device comprising:
a concentration setting component configured to cause the printing component to set a print concentration corresponding to an output value which is output from the optical sensor on a basis of the reflected light from the target location irradiated with the predetermined light.

12. A concentration setting method, comprising:
irradiating a medium before printing with reflected light of a predetermined light and receiving the reflected light from the medium irradiated with the predetermined light; and
setting a print concentration of a group corresponding to a type of the medium on a basis of an output value of the reflected light.

13. The concentration setting method according to claim 12, further comprising:
receiving a first reflected light, which is reflected light from a side wall irradiated with the predetermined light; and
receiving a second reflected light, which is reflected light from a print surface of the medium irradiated with the predetermined light.

14. The concentration setting method according to claim 13, wherein the first reflected light has a first wavelength and the second reflected light has a second wavelength, the second wavelength different from the first wavelength.

15. The concentration setting method according to any one of claims 12 to 14, further comprising:
receiving a first reflected light, which is reflected light from a side wall irradiated with the predetermined light; and
receiving a second reflected light, which is reflected light from a back side of a print surface of the medium irradiated with the predetermined light.
